# EUROPEAN PATENT APPLICATION

(11) **EP 4 216 622 A2**
(43) Date of publication of application: **26.07.2023**
(21) Application number: 22200098.6
(22) Date of filing: 06.10.2022
(51) Int. Cl.: H04W 60/00, H04W 36/14, H04W 88/06

(54) **NETWORK REGISTRATION METHOD FOR TRAFFIC STEERING AND DEVICE SUPPORTING THE SAME**

(30) Priority: 24.01.2022 KR 20220010144
(71) Applicant: LG Electronics, Inc., Yeongdeungpo-gu Seoul 07336 (KR)
(72) Inventor: YOUN, Myungjune, 06772 Seoul (KR); KIM, Hyunsook, 06772 Seoul (KR); KIM, Laeyoung, 06772 Seoul (KR)
(74) Representative: Mooser, Sebastian Thomas

(57) **Abstract**

A network registration method for traffic steering and a device supporting the same is provided. An Access and mobility Management Function (AMF) receives a registration request message from a UE over a second non-3rd Generation Partnership Project (non-3GPP) access. The registration request message includes information related to access switching from a first non-3GPP access to the second non-3GPP access. Based on the registration request message, the AMF i) performs a normal registration procedure, and ii) delays a Unified Data Management (UDM) registration procedure. In addition, upon receiving, from a Session Management Function (SMF), information informing that the access switching from the first non-3GPP access to the second non-3GPP access is completed for the UE, the AMF performs an Access Network (AN) release procedure over the first non-3GPP access, performs the delayed UDM registration procedure.

## Description

### TECHNICAL FIELD

The present disclosure relates to a network registration method for traffic steering and a device supporting the same.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

The Access Traffic Steering, Switching & Splitting (ATSSS) feature enables communication between the User Equipment (UE) and User Plane Function (UPF) simultaneously over multiple paths, typically over one 3GPP access path and over one non-3GPP access path. By leveraging the simultaneous communication over multiple paths, the 5G system can provide services with improved user experience, can distribute the traffic across multiple accesses in a policy-based fashion, can provide new high-data-rate services, etc.

### SUMMARY

The 5G Core Network (5GC) supports various types of non-3GPP accesses. For example, 5GC may support untrusted non-3GPP access, trusted non-3GPP access, wireline access, etc.

While a User Equipment (UE) performs registration in an untrusted non-3GPP access and establishes a Multi-Access Protocol Data Unit (MA PDU) session for the ATSSS function and receives the service, when it discovers a trusted non-3GPP access, the UE may try to use the discovered trusted non-3GPP access according to the UE's configuration. In this case, there may be a need for a method to smoothly switch traffic between non-3GPP accesses.

In an aspect, a method performed by a UE adapted to operate in a wireless communication system is provided. The method includes, transmitting a registration request message to an Access and mobility Management Function (AMF) over a second non-3GPP access. The registration request message includes information related to access switching from a first non-3GPP access to the second non-3GPP access. The method includes, transmitting a PDU session establishment request message to a Session Management Function (SMF) over the second non-3GPP access. The PDU session establishment request message includes information about a MA PDU session. The method includes, receiving, from the AMF, a deregistration request message informing that the UE is deregistered over the first non-3GPP access.

In another aspect, a method performed by an AMF adapted to operate in a wireless communication system is provided. The method includes, receiving a registration request message from a UE over a second non-3GPP access. The registration request message includes information related to access switching from the first non-3GPP access to the second non-3GPP access. The method includes, based on the registration request message, i) performing a normal registration procedure, and ii) delaying a Unified Data Management (UDM) registration procedure. The method includes, receiving, from a SMF, information informing that the access switching from the first non-3GPP access to the second non-3GPP access is completed for the UE, performing an Access Network (AN) release procedure over the first non-3GPP access, performing the delayed UDM registration procedure, and transmitting, to the UE, a deregistration request message informing that the UE is deregistered over the first non-3GPP access.

In another aspect, an apparatus for implementing the above method is provided.

The present disclosure may have various advantageous effects.

For example, the UE can support service continuity by supporting access addition for the MA PDU session between different types of non-3GPP accesses.

For example, when the UE finds a new non-3GPP access, by supporting access switching between non-3GPP accesses, traffic using the MA PDU session can be transmitted smoothly.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of 5G system architecture to which implementations of the present disclosure is applied.
FIGS. 6 and 7 show an example of a registration procedure to which implementations of the present disclosure is applied.
FIGS. 8 and 9 show an example of a PDU session establishment procedure to which implementations of the present disclosure is applied.
FIG. 10 shows an example of an architecture for a 5GC with an untrusted non-3GPP access to which implementations of the present disclosure is applied.
FIG. 11 shows an example of an architecture for a 5GC with a trusted non-3GPP access to which implementations of the present disclosure is applied.
FIG. 12 shows an example in which traffic of a MA PDU session is switched between an untrusted non-3GPP access and a trusted non-3GPP access to which implementations of the present disclosure is applied.
FIG. 13 shows an example of a method performed by a UE to which implementations of the present disclosure is applied.
FIG. 14 shows an example of a method performed by an AMF to which implementations of the present disclosure is applied.
FIG. 15 shows an example of a procedure for switching from an untrusted non-3GPP access to a trusted non-3GPP access to which implementations of the present disclosure is applied.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

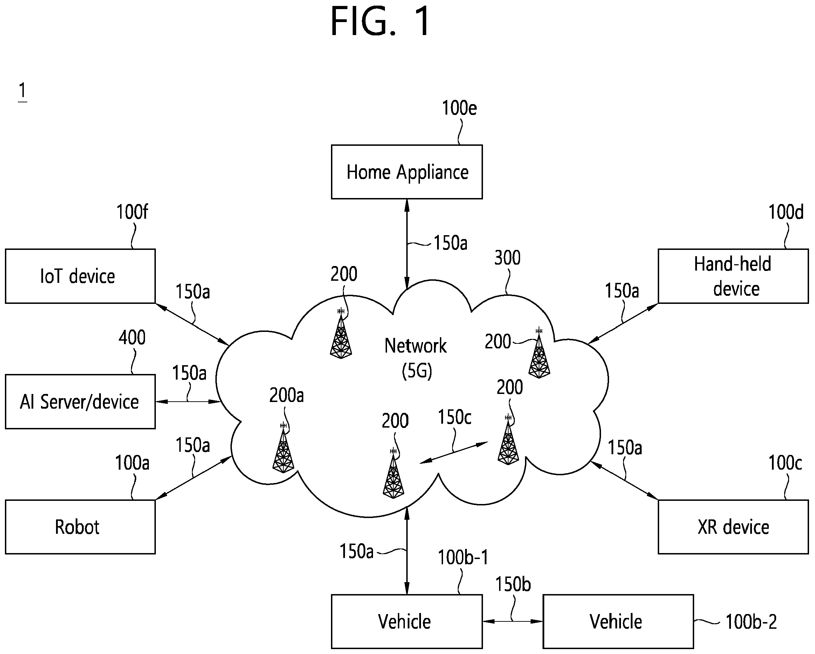

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

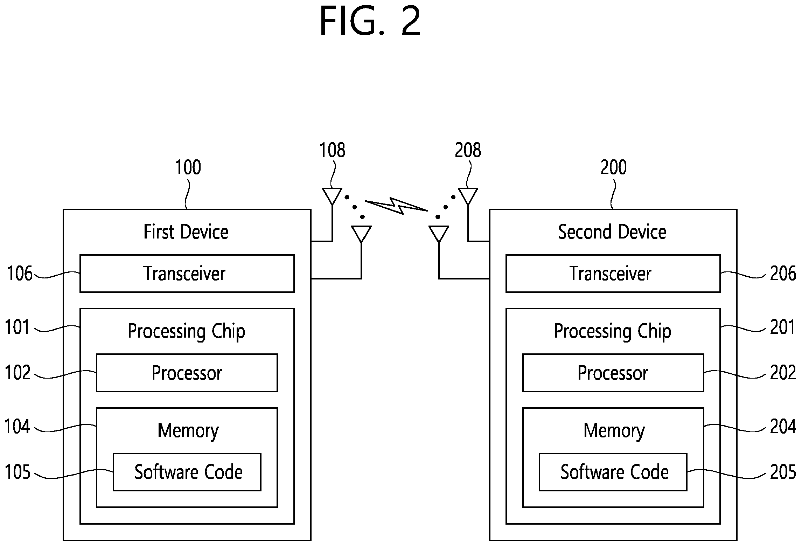

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be adapted to include the modules, procedures, or functions. Firmware or software adapted to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB

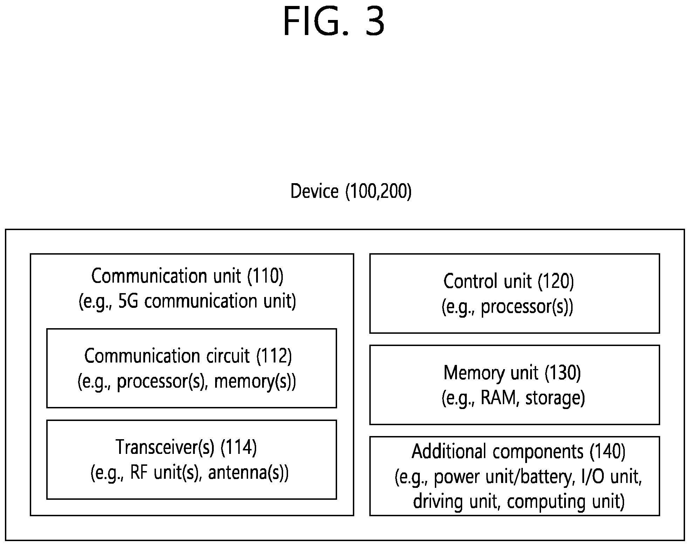

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

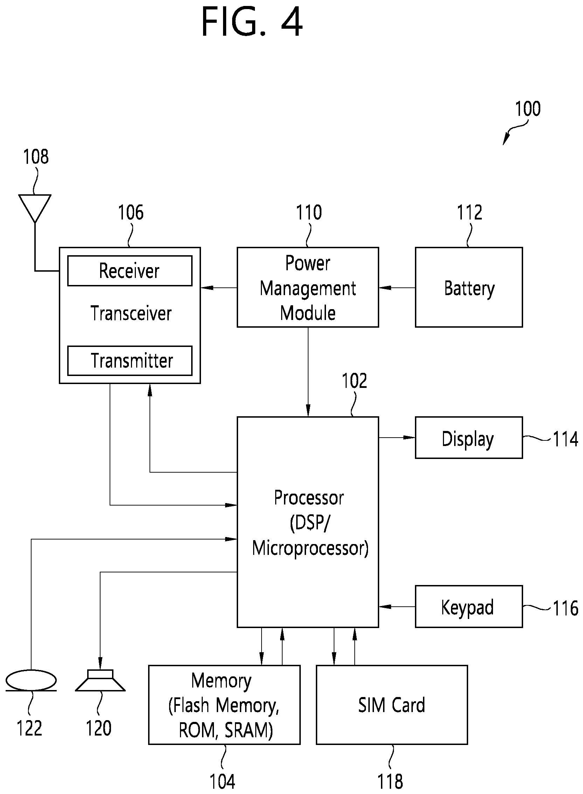

FIG. 4 shows an example of UE to which implementations of the present disclosure is applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

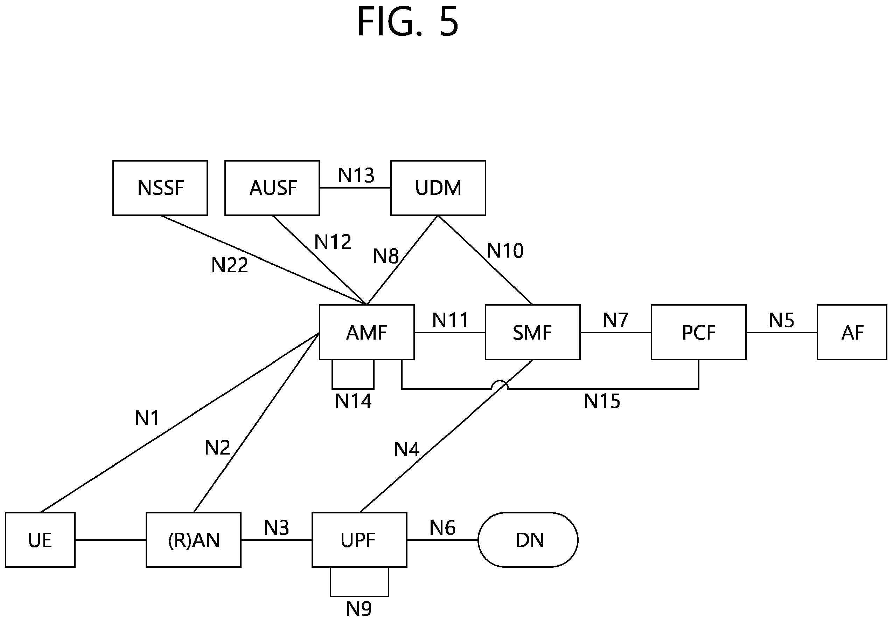

FIG. 5 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 5 depicts the 5G system architecture in the non-roaming case, using the reference point representation showing how various network functions interact with each other.

In FIG. 5, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 5. For clarity, the NWDAF and its connections with other NFs, e.g., PCF, are not depicted in FIG. 5.

The 5G system architecture contains the following reference points:
- N1: Reference point between the UE and the AMF.
- N2: Reference point between the (R)AN and the AMF
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described.

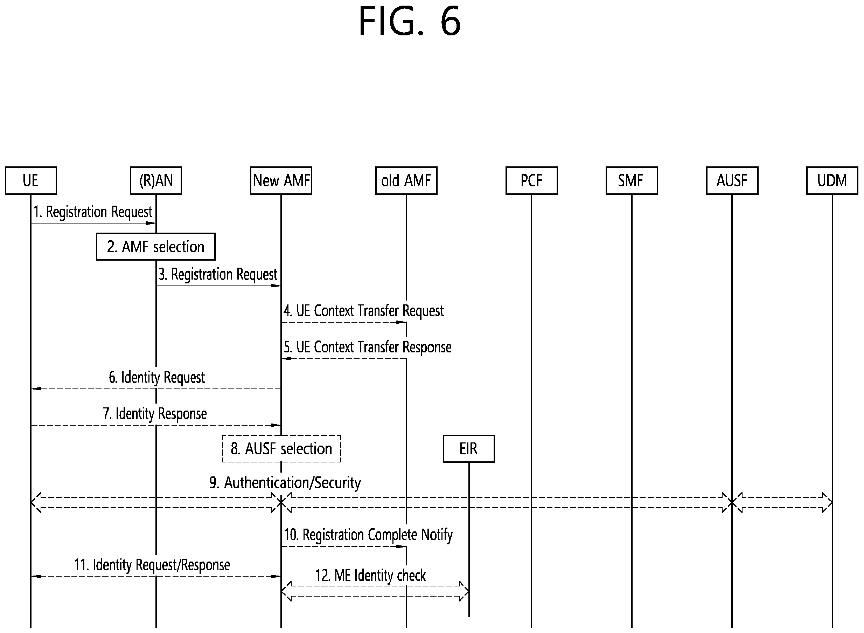

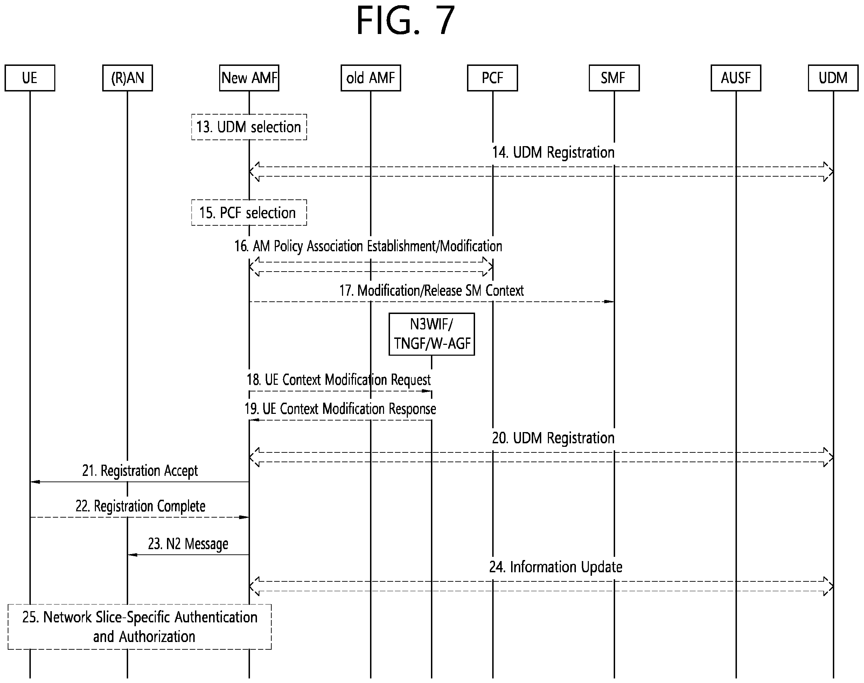

FIGS. 6 and 7 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf Communication_RegistrationCompleteNotify service operation. If the authentication/security procedure fails, then the registration shall be rejected, and the new AMF may invoke the Namf Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN

(24) Step 24: The new AMF may perform information update towards the UDM.

(25) Step 25: The UE may execute Network Slice-Specific Authentication and Authorization procedure.

A PDU session establishment procedure is described.

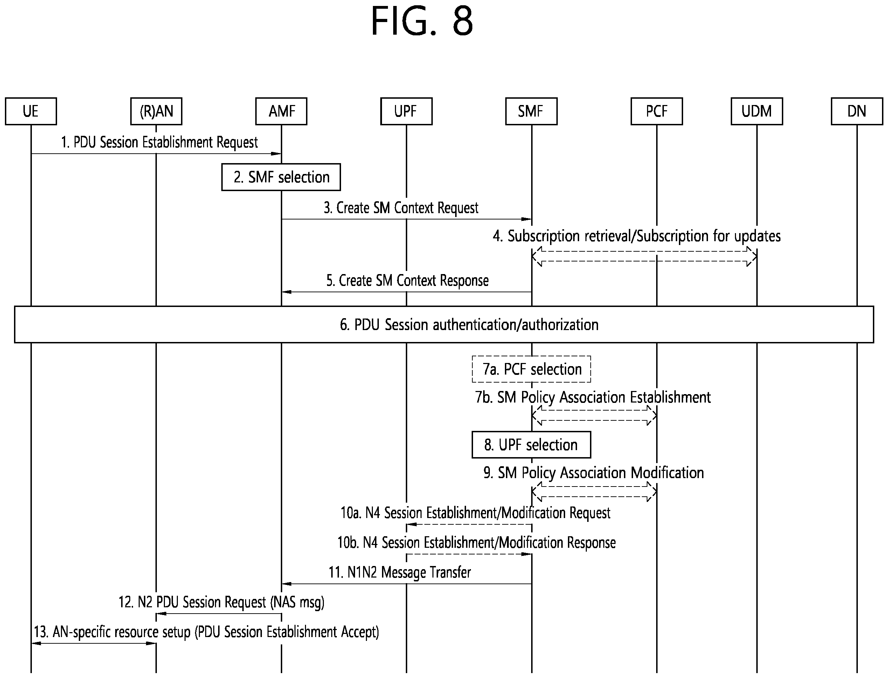

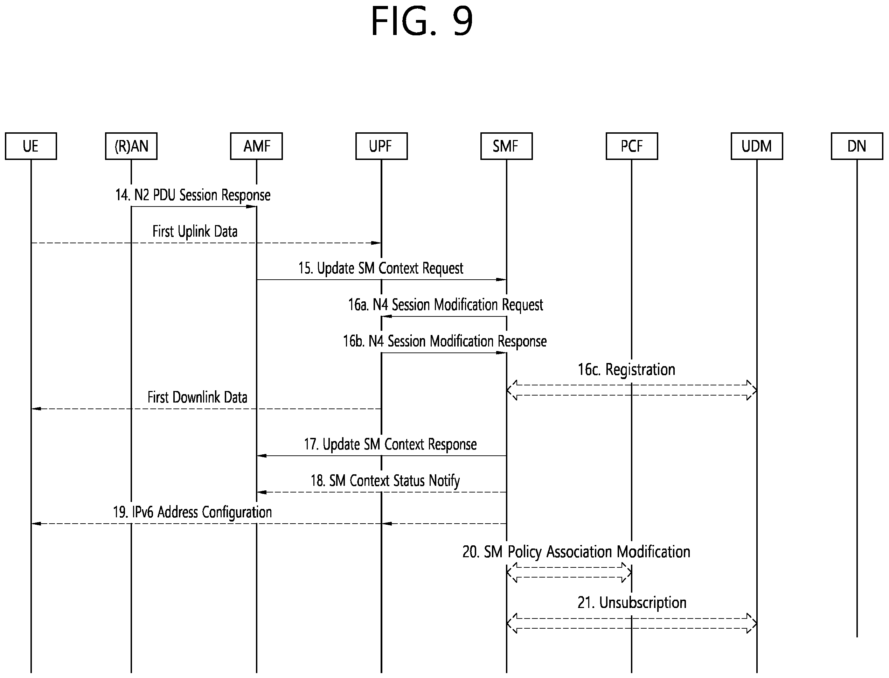

FIGS. 8 and 9 show an example of a PDU session establishment procedure to which implementations of the present disclosure is applied.

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 8 and 9 specify the procedures for establishing PDU sessions associated with a single access type at a given time.

The procedure shown in FIGS. 8 and 9 assumes that the UE has already registered on the AMF thus unless the UE is emergency registered the AMF has already retrieved the user subscription data from the UDM.

First, procedures of FIG. 8 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 9, which follow the procedures of FIG. 8, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

Non-3GPP access is described.

The 5G Core Network (5GC) supports connectivity of UEs via non-3GPP access networks, e.g. Wireless Local Area Network (WLAN) access networks.

The 5GC supports both untrusted non-3GPP access networks and Trusted Non-3GPP Access Networks (TNANs).

An untrusted non-3GPP access network is connected to the 5GC via a N3IWF, whereas a trusted non-3GPP access network is connected to the 5GC via a Trusted Non-3GPP Gateway Function (TNGF). Both the N3IWF and the TNGF interface with the 5GC control plane and user plane functions via the N2 and N3 interfaces, respectively.

A non-3GPP access network may advertise the PLMNs for which it supports trusted connectivity and the type of supported trusted connectivity (e.g. "5G connectivity"). Therefore, the UEs may discover the non-3GPP access networks that can provide trusted connectivity to one or more PLMNs.

The UE may decide to use trusted or untrusted non-3GPP access for connecting to a 5G PLMN.

When the UE decides to use untrusted non-3GPP access to connect to a 5GC in a PLMN
- the UE first selects and connects with a non-3GPP access network; and then
- the UE selects a PLMN and an N3IWF in this PLMN. The PLMN/N3IWF selection and the non-3GPP access network selection are independent.

When the UE decides to use trusted non-3GPP access to connect to a 5GC in a PLMN
- the UE first selects a PLMN; and then
- the UE selects a non-3GPP access network (a TNAN) that supports trusted connectivity to the selected PLMN. In this case, the non-3GPP access network selection is affected by the PLMN selection.

A UE that accesses the 5GC over a non-3GPP access, after UE registration, support NAS signaling with 5GC control plane functions using the N1 reference point.

When a UE is connected via a NG-RAN and via a non-3GPP access, multiple N1 instances exist for the UE, i.e., there are one N1 instance over NG-RAN and one N1 instance over non-3GPP access.

A UE simultaneously connected to the same 5GC of a PLMN over a 3GPP access and a non-3GPP access is served by a single AMF in this 5GC.

When a UE is connected to a 3GPP access of a PLMN, if the UE selects a N3IWF and the N3IWF is located in a PLMN different from the PLMN of the 3GPP access, e.g., in a different VPLMN or in the HPLMN, the UE is served separately by the two PLMNs. The UE is registered with two separate AMFs. PDU sessions over the 3GPP access are served by V-SMFs different from the V-SMF serving the PDU Sessions over the non-3GPP access. The same may be true when the UE uses trusted non-3GPP access, i.e., the UE may select one PLMN for 3GPP access and a different PLMN for trusted non-3GPP access.

The PLMN selection for the 3GPP access does not depend on the PLMN that is used for non-3GPP access. In other words, if a UE is registered with a PLMN over a non-3GPP access, the UE performs PLMN selection for the 3GPP access independently of this PLMN

A UE establishes an IPsec tunnel with the N3IWF or with the TNGF in order to register with the 5GC over non-3GPP access.

It is possible to maintain the UE NAS signaling connection with the AMF over the non-3GPP access after all the PDU sessions for the UE over that access have been released or handed over to 3GPP access.

N1 NAS signaling over non-3GPP accesses is protected with the same security mechanism applied for N1 over a 3GPP access.

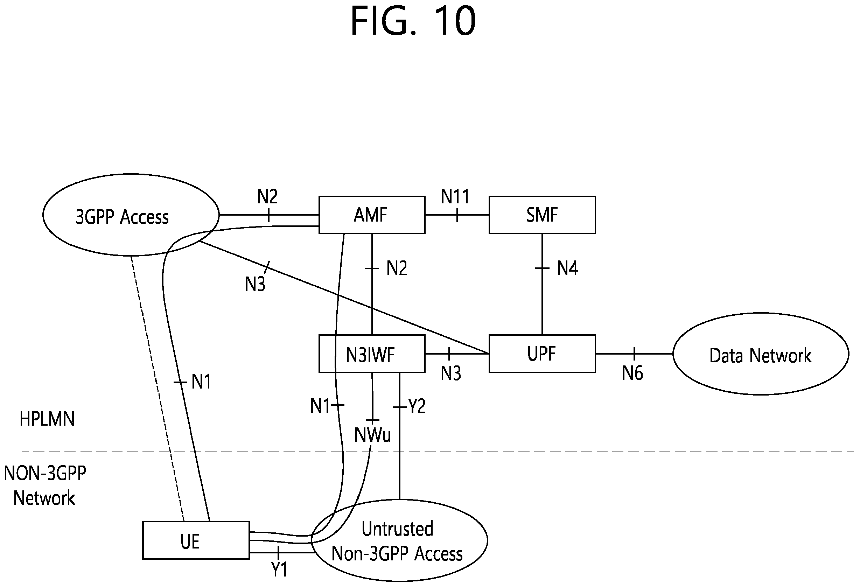

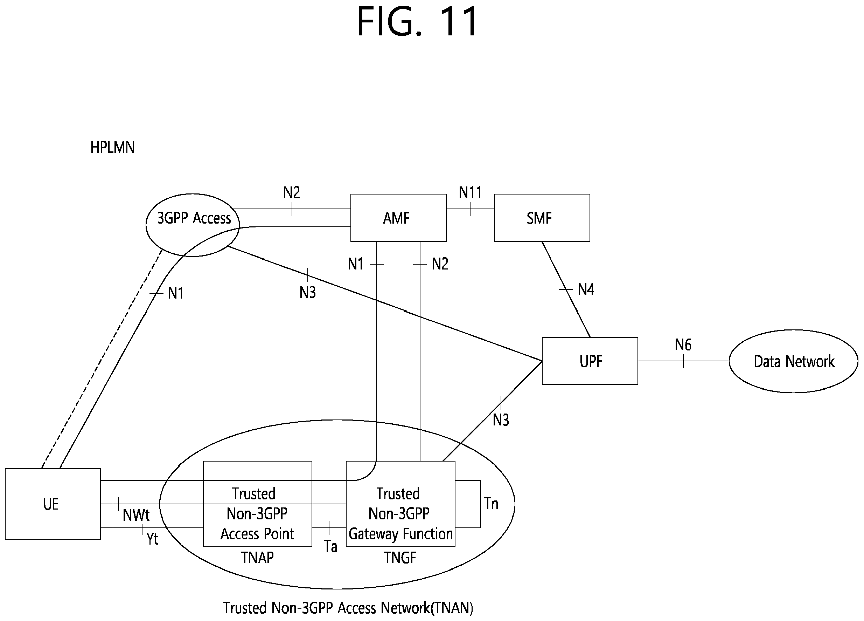

FIG. 10 shows an example of an architecture for a 5GC with an untrusted non-3GPP access to which implementations of the present disclosure is applied. FIG. 11 shows an example of an architecture for a 5GC with a trusted non-3GPP access to which implementations of the present disclosure is applied.

Access Traffic Steering, Switching & Splitting (ATSSS) is described.

The ATSSS feature is an optional feature that may be supported by the UE and the 5GC.

The ATSSS feature enables a multi-access PDU connectivity Service, which can exchange PDUs between the UE and a data network by simultaneously using one 3GPP access network and one non-3GPP access network and two independent N3/N9 tunnels between the PDU Session Anchor (PSA) and RAN/AN. The multi-access PDU connectivity service is realized by establishing a Multi-Access PDU (MA PDU) Session, i.e., a PDU session that may have user-plane resources on two access networks. This assumes both 3GPP access and non-3GPP access are allowed for the S-NSSAI of the PDU session.

The UE may request a MA PDU session when the UE is registered via both 3GPP and non-3GPP accesses, or when the UE is registered via one access only.

After the establishment of a MA PDU session, and when there are user-plane resources on both access networks, the UE applies network-provided policy (i.e., ATSSS rules) and considers local conditions (such as network interface availability, signal loss conditions, user preferences, etc.) for deciding how to distribute the uplink traffic across the two access networks. Similarly, the UPF anchor of the MA PDU session applies network-provided policy (i.e., N4 rules) and feedback information received from the UE via the user-plane (such as access network Unavailability or Availability) for deciding how to distribute the downlink traffic across the two N3/N9 tunnels and two access networks. When there are user-plane resources on only one access network, the UE applies the ATSSS rules and considers local conditions for triggering the establishment or activation of the user plane resources over another access.

The type of a MA PDU Session may be one of IPv4, IPv6, IPv4v6, and Ethernet.

The ATSSS feature may be supported over any type of access network, including untrusted and trusted non-3GPP access networks, wireline 5G access networks, etc., as long as a MA PDU session can be established over this type of access network.

If the UE, due to mobility, moves from being served by a source AMF supporting ATSSS to a target AMF not supporting ATSSS, the MA PDU session is released.

MA PDU session is described in more detail.

MA PDU session is managed by using the session management functionality, with the following additions and modifications.

When the UE wants to request a new MA PDU session:
- If the UE is registered to the same PLMN over 3GPP and non-3GPP accesses, then the UE sends a PDU Session Establishment Request over any of the two accesses. The UE also provides Request Type as "MA PDU Request" in the UL NAS Transport message. The AMF informs the SMF that the UE is registered over both accesses and this triggers the establishment of user-plane resources on both accesses and two N3/N9 tunnels between PSA and the RAN/AN.
- If the UE is registered to different PLMNs over 3GPP and non-3GPP accesses, then the UE sends a PDU Session Establishment Request over one access. The UE also provides Request Type as "MA PDU Request" in the UL NAS Transport message. After this PDU session is established with one N3/N9 tunnel between the PSA and (R)AN established, the UE sends another PDU Session Establishment Request over the other access. The UE also provides the same PDU session ID and Request Type as "MA PDU Request" in the UL NAS Transport message. Two N3/N9 tunnels and user-plane resources on both accesses are established.
- If the UE is registered over one access only, then the UE sends a PDU Session Establishment Request over this access. The UE also provides Request Type as "MA PDU Request" in the UL NAS Transport message. One N3/N9 tunnel between the PSA and (R)AN and user-plane resources on this access only are established. After the UE is registered over the second access, the UE establishes user-plane resources on the second access.
- In the PDU Session Establishment Request that is sent to request a new MA PDU session, the UE provides also its ATSSS capabilities, which indicate the steering functionalities and the steering modes supported in the UE.
- If the UE requests an S-NSSAI, this S-NSSAI is allowed on both accesses.
   Otherwise, the MA PDU session is not established.
- The SMF determines the ATSSS capabilities supported for the MA PDU session based on the ATSSS capabilities provided by the UE and per DNN configuration on SMF. The SMF provides the ATSSS capabilities of the MA PDU session to the PCF during PDU Session Establishment.
- The PCC rules provided by the PCF include MA PDU session control information. They are used by the SMF to derive ATSSS rules for the UE and N4 rules for the UPF. When dynamic PCC is not used for the MA PDU session, the SMF provides ATSSS rules and N4 rules based on local configuration (e.g., based on DNN or S-NSSAI).
- The UE receives ATSSS rules from the SMF, which indicate how the uplink traffic should be routed across 3GPP access and non-3GPP access. Similarly, the UPF receives N4 rules from the SMF, which indicate how the downlink traffic should be routed across 3GPP access and non-3GPP access.
- When the SMF receives a PDU Session Establishment Request and a "MA PDU Request" indication and determines that UP security protection is required for the PDU session, the SMF only confirms the establishment of the MA PDU session if the 3GPP access network can enforce the required UP security protection. The SMF needs not confirm whether the non-3GPP access can enforce the required UP security protection.

After the MA PDU session establishment:
- At any given time, the MA PDU session may have user-plane resources on both 3GPP and non-3GPP accesses, or on one access only, or may have no user-plane resources on any access.
- The AMF, SMF, PCF and UPF maintain their MA PDU session contexts, even when the UE deregisters from one access (but remains registered on the other access).
- When the UE deregisters from one access (but remains registered on the other access), the AMF informs the SMF to release the resource of this access type in the UPF for the MA PDU session. Subsequently, the SMF notifies the UPF that the access type has become unavailable and the N3/N9 tunnel for the access type are released.
- If the UE wants to add user-plane resources on one access of the MA PDU session, e.g., based on access network performance measurement and/or ATSSS rules, then the UE sends a PDU Session Establishment Request over this access containing PDU session ID of the MA PDU session. The UE also provides Request Type as "MA PDU Request" and the same PDU session ID in the UL NAS Transport message. If there is no N3/N9 tunnel for this access, the N3/N9 tunnel for this access is established.
- If the UE wants to re-activate user-plane resources on one access of the MA PDU session, e.g., based on access network performance measurement and/or ATSSS rules, then the UE initiates the UE triggered service request procedure over this access.
- If the network wants to re-activate the user-plane resources over 3GPP access or non-3GPP access of the MA PDU session, the network initiates the network triggered service request procedure.
- The SMF may add, remove or update one or more individual ATSSS rules of the UE by sending new or updated ATSSS rules with the corresponding rule IDs to the UE.

A MA PDU session may be established either:
a) when it is explicitly requested by an ATSSS-capable UE; or
b) when an ATSSS-capable UE requests a single-access PDU session but the network decides to establish a MA PDU session instead. This may occur when the UE requests a single-access PDU session but no policy (e.g., no UE Route Selection Policy (URSP) rule) and no local restrictions in the UE mandate a single access for the PDU session.

The AMF indicates as part of the registration procedure whether ATSSS is supported or not. When ATSSS is not supported, the UE does not:
- request establishment of a MA PDU session; or
- request addition of user plane resources for an existing MA PDU session; or
- request establishment of a PDU session with "MA PDU Network-Upgrade Allowed" indication; or
- request PDU session modification with Request Type of "MA PDU request" or with "MA PDU Network-Upgrade Allowed" indication after moving from EPC to 5GC.

An ATSSS-capable UE may decide to request a MA PDU session based on the provisioned URSP rules. In particular, the UE requests a MA PDU session when the UE applies a URSP rule, which triggers the UE to establish a new PDU session and the Access Type Preference component of the URSP rule indicates "Multi-Access".

In 3GPP NR Rel-18, how the MA PDU session can support more types of access paths will be discussed. More specifically, how the traffic of an MA PDU session can be switched between two non-3GPP access paths (e.g., untrusted non-3GPP access and trusted non-3GPP access) in the same PLMN may be discussed.

For example, a case in which traffic is switched between one non-3GPP access path from the UE to a N3IWF in PLMN-1 and another non-3GPP access path from the UE to a TNGF in PLMN-1 may be considered.

The UE registrations via two non-3GPP access paths in PLMN-1 may be maintained only for the duration needed to switch the traffic from a source non-3GPP access path to a target non-3GPP access path. After switching the traffic, only one UE registration via non-3GPP access may exist.

The UE may also be able to access PLMN-1 directly using 3GPP radio technology. In this case, the MA PDU session may have three access paths for the duration needed to switch the traffic from a source non-3GPP access path to a target non-3GPP access path. The existing steering modes and the existing steering functionalities is reused and, if needed, potential enhancements may be considered to support the above case.

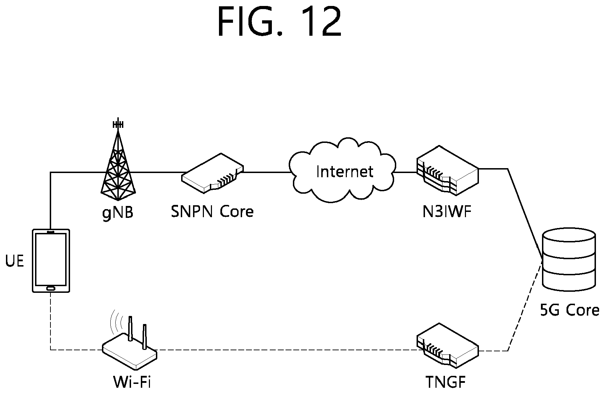

FIG. 12 shows an example in which traffic of a MA PDU session is switched between an untrusted non-3GPP access and a trusted non-3GPP access to which implementations of the present disclosure is applied.

Referring to 12, while the UE receives service over an untrusted non-3GPP access of the 5GC through a Stand-alone Non-Public Network (SNPN) in 3GPP access, and when Wi-Fi becomes available, the UE may receive service over a trusted non-3GPP access using Wi-Fi. In this case, traffic of the MA PDU session may be switched from an untrusted non-3GPP access to a trusted non-3GPP access.

The UE and the network independently perform registration in the 3GPP access and the non-3GPP access. However, if registration is performed through a different RAT and/or access type in the same 3GPP access or non-3GPP access, the previous registration may be deregistered by the network. For example, if the UE is registered over an untrusted non-3GPP access, when the UE performs registration over a trusted non-3GPP access, since the UE, AMF and UDM manage only one registration on a non-3GPP access, registration over an untrusted non-3GPP access may be deregistered. Therefore, as described above, when the traffic of the MA PDU session is switched from the untrusted non-3GPP access to the trusted non-3GPP access, when the UE performs registration over a trusted non-3GPP access, a situation that registration over an untrusted non-3GPP access is deregistered, and all data transmitted over an untrusted non-3GPP access are dropped may occur. Since this adversely affects the user experience, a method for solving it may be needed.

Hereinafter, the present disclosure provides various implementations to solve the above-described problems. The various implementations of the present disclosure to be described below may be performed or applied in combination and/or complement. The various implementations of the present disclosure to be described below are described assuming access switching over non-3GPP accesses, but this is only an example, and various implementations of the present disclosure may be similarly applied to access switching over 3GPP accesses.

In the present disclosure to be described below, some steps may be performed simultaneously and/or in parallel, or may be performed in a reversed order.

### 1. First implementation: A method of managing registration for untrusted non-3GPP access and trusted non-3GPP access respectively in non-3GPP access

According to the first implementation of the present disclosure, the UE and the network may manage registration per non-3GPP access type and/or RAT type (i.e., trusted non-3GPP access and untrusted non-3GPP access). Currently, the UE and the network manage only one registration status for 3GPP access and non-3GPP access, respectively. According to the first implementation of the present disclosure, the registration status of the non-3GPP access may be managed and/or supported by being classified per non-3GPP access type and/or per RAT type.

The RAT type identifies the transmission technology used in the access network for both 3GPP accesses and non-3GPP accesses, for example, NR, NB-IoT, untrusted non-3GPP, trusted non-3GPP, trusted IEEE 802.11 non-3GPP access, Wireline, Wireline-Cable, etc.

That is, since the non-3GPP access type and/or the RAT type may be defined separately as an untrusted non-3GPP access and a trusted non-3GPP access, if the registration status is managed by distinguishing the non-3GPP access type and/or the RAT type, a plurality of registrations may be supported simultaneously in the non-3GPP access.

To this end, the AMF may create and manage the registration status of the UE per RAT type. In addition, when the AMF performs UDM registration in order to register the serving AMF with the UDM, information about the RAT type may be notified. Based on the information about the RAT type received from the AMF, the UDM may store information about the RAT type together with the access type (e.g., 3GPP access, non-3GPP access). Currently, even though the AMF transmits information about the RAT type to the UDM, but the AMF does not manage the registration status per RAT type, and the UDM does not manage the registration status per RAT type. In addition, when the SMF performs registration for a PDU session with the UDM, information about the RAT type may be notified together, and the UDM may store it.

In addition, when exchanging NAS signaling between the UE and SMF or other network nodes, the SMF or other network node may inform the AMF through which access type and/or which RAT type the NAS signaling should be transmitted when requesting transmission for NAS signaling.

### 2. Second implementation: A method of delaying UDM registration in AMF until non-3GPP access switching is completed

According to the second implementation of the present disclosure, although the UE and the network manage only one registration status per access type, in order for the UE and the network to support switching for the non-3GPP access, the UE and the network may temporarily allow registration for untrusted non-3GPP access and trusted non-3GPP access.

More specifically, according to the second implementation of the present disclosure, when the UE switches from an untrusted non-3GPP access to a trusted non-3GP access, the UE and the network may operate as follows. When a UE establishes MA PDU session, the SMF may indicate to the UE whether non-3GPP access switching is supported. Based on this indication, the UE may determine to change non-3GPP access from an untrusted non-3GPP access to a trusted non-3GPP access. Whether and when to switch non-3GPP access may be determined by the UE. If the UE determines to switch access, the UE performs registration over the new non-3GPP access (i.e., trusted non-3GPP access) with new registration type to indicate the registration is for switching non-3GPP access. The AMF follows normal registration procedure, but does not perform UDM registration. After the registration procedure is completed, the UE sends PDU Session Establishment Request message to add new non-3GPP access (i.e., trusted non-3GPP access) to the existing MA PDU session. After the access over the new non-3GPP access (i.e., trusted non-3GPP access) is established, the UE and UPF starts sending traffic over the new non-3GPP access (i.e., trusted non-3GPP access) and stops sending traffic over the old non-3GPP access (i.e., untrusted non-3GPP access). The AMF triggers AN release procedure over the old non-3GPP access (i.e., untrusted non-3GPP access) and performs UDM registration.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

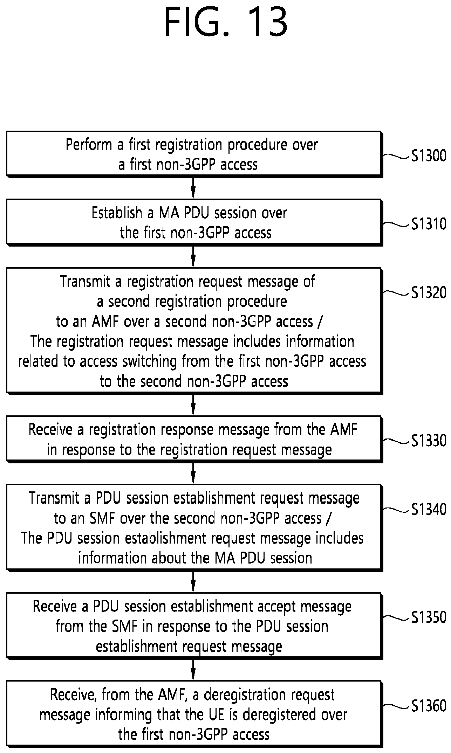

FIG. 13 shows an example of a method performed by a UE to which implementations of the present disclosure is applied.

In step S 1300, the method includes performing a first registration procedure over a first non-3GPP access.

In step S1310, the method includes establishing a MA PDU session over the first non-3GPP access.

In step S1320, the method includes transmitting a registration request message of a second registration procedure to an AMF over a second non-3GPP access. The registration request message includes information related to access switching from the first non-3GPP access to the second non-3GPP access. At this time, registration over the first non-3GPP access is maintained.

In some implementations, the first non-3GPP access or the second non-3GPP access may be any one of an untrusted non-3GPP access, a trusted non-3GPP access, or a wireline access. For example, the first non-3GPP access may be an untrusted non-3GPP access and the second non-3GPP access may be a trusted non-3GPP access. For example, the first non-3GPP access may be a trusted non-3GPP access and the second non-3GPP access may be an untrusted non-3GPP access. For example, both the first non-3GPP access and the second non-3GPP access may be an untrusted non-3GPP access or a trusted non-3GPP access.

In some implementations, the method may further comprise performing a registration procedure over a 3GPP access before performing the access switching.

In some implementations, establishing the MA PDU session may comprise receiving, from the SMF, information about whether the access switching in a non-3GPP access is supported. Based on the received information about whether the access switching in a non-3GPP access is supported, the method may further comprise determining the access switching from the first non-3GPP access to the second non-3GPP access.

In some implementations, the information related to the access switching may be a registration type set to "non-3GPP access switching registration" and/or "temporary registration". In this case, the UE may perform a newly defined type of registration.

In some implementations, the information related to the access switching may be a registration type set to "mobility registration update" that is not used in a non-3GPP access.

In some implementations, the information related to the access switching may be a new indicator in the registration request message. In this case, the UE may use the conventional registration type as it is.

In step S1330, the method includes receiving a registration accept message from the AMF in response to the registration request message.

In step S1340, the method includes transmitting a PDU session establishment request message to a SMF over the second non-3GPP access. The PDU session establishment request message includes information about the MA PDU session.

In some implementations, the information about the MA PDU session may include at least one of a request type set to "MA PDU Request" in the PDU session establishment request message or a PDU session Identifier (ID) of the MA PDU session.

In step S1350, the method includes receiving a PDU session establishment accept message from the SMF in response to the PDU session establishment request message.

In step S1360, the method includes receiving, from the AMF, a deregistration request message informing that the UE is deregistered over the first non-3GPP access.

In some implementations, the UE may communicate with at least one of a mobile device, a network and/or an autonomous vehicle other than the UE.

Furthermore, the method in perspective of the UE described above in FIG. 13 may be performed by the first wireless device 100 shown in FIG. 2, the wireless device 100 shown in FIG. 3, and/or the UE 100 shown in FIG. 4.

More specifically, the UE comprises at least one transceiver, at least one processor, and at least one memory operably connectable to the at least one processor. The at least one memory stores instructions to cause the at least one processor to perform following operations.

The UE performs a first registration procedure over a first non-3GPP access.

The UE establishes a MA PDU session over the first non-3GPP access.

The UE transmits a registration request message of a second registration procedure to an AMF over a second non-3GPP access. The registration request message includes information related to access switching from the first non-3GPP access to the second non-3GPP access. At this time, registration over the first non-3GPP access is maintained.

In some implementations, the first non-3GPP access or the second non-3GPP access may be any one of an untrusted non-3GPP access, a trusted non-3GPP access, or a wireline access. For example, the first non-3GPP access may be an untrusted non-3GPP access and the second non-3GPP access may be a trusted non-3GPP access. For example, the first non-3GPP access may be a trusted non-3GPP access and the second non-3GPP access may be an untrusted non-3GPP access. For example, both the first non-3GPP access and the second non-3GPP access may be an untrusted non-3GPP access or a trusted non-3GPP access.

In some implementations, the UE may perform a registration procedure over a 3GPP access before performing the access switching.

In some implementations, establishing the MA PDU session may comprise receiving, from the SMF, information about whether the access switching in a non-3GPP access is supported. Based on the received information about whether the access switching in a non-3GPP access is supported, the UE may determine the access switching from the first non-3GPP access to the second non-3GPP access.

In some implementations, the information related to the access switching may be a registration type set to "non-3GPP access switching registration" and/or "temporary registration". In this case, the UE may perform a newly defined type of registration.

In some implementations, the information related to the access switching may be a registration type set to "mobility registration update" that is not used in a non-3GPP access.

In some implementations, the information related to the access switching may be a new indicator in the registration request message. In this case, the UE may use the conventional registration type as it is.

The UE receives a registration accept message from the AMF in response to the registration request message.

The UE transmits a PDU session establishment request message to a SMF over the second non-3GPP access. The PDU session establishment request message includes information about the MA PDU session.

In some implementations, the information about the MA PDU session may include at least one of a request type set to "MA PDU Request" in the PDU session establishment request message or a PDU session ID of the MA PDU session.

The UE receives a PDU session establishment accept message from the SMF in response to the PDU session establishment request message.

The UE receives, from the AMF, a deregistration request message informing that the UE is deregistered over the first non-3GPP access.

Furthermore, the method in perspective of the UE described above in FIG. 13 may be performed by control of the processor 102 included in the first wireless device 100 shown in FIG. 2, by control of the communication unit 110 and/or the control unit 120 included in the wireless device 100 shown in FIG. 3, and/or by control of the processor 102 included in the UE 100 shown in FIG. 4.

More specifically, a processing apparatus adapted to control a UE in a wireless communication system comprises at least one processor, and at least one memory operably connectable to the at least one processor. The at least one processor is adapted to perform following operations comprising: performing a first registration procedure over a first non-3GPP access, establishing a MA PDU session over the first non-3GPP access, transmitting a registration request message of a second registration procedure including information related to access switching from the first non-3GPP access to the second non-3GPP access to an AMF over a second non-3GPP access, receiving a registration accept message from the AMF in response to the registration request message, transmitting a PDU session establishment request message including information about the MA PDU session to a SMF over the second non-3GPP access, receiving a PDU session establishment accept message from the SMF in response to the PDU session establishment request message, and receiving, from the AMF, a deregistration request message informing that the UE is deregistered over the first non-3GPP access.

Furthermore, the method in perspective of the UE described above in FIG. 13 may be performed by a software code 105 stored in the memory 104 included in the first wireless device 100 shown in FIG. 2.

The technical features of the present disclosure may be embodied directly in hardware, in a software executed by a processor, or in a combination of the two. For example, a method performed by a wireless device in a wireless communication may be implemented in hardware, software, firmware, or any combination thereof. For example, a software may reside in RAM, flash memory, ROM, EPROM, EEPROM, registers, hard disk, a removable disk, a CD-ROM, or any other storage medium.

Some example of storage medium may be coupled to the processor such that the processor can read information from the storage medium. In the alternative, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include RAM such as synchronous dynamic random access memory (SDRAM), ROM, non-volatile random access memory (NVRAM), EEPROM, flash memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some implementations of the present disclosure, a non-transitory computer-readable medium (CRM) has stored thereon a plurality of instructions.

More specifically, CRM stores instructions to cause at least one processor to perform following operations comprising: performing a first registration procedure over a first non-3GPP access, establishing a MA PDU session over the first non-3GPP access, transmitting a registration request message of a second registration procedure including information related to access switching from the first non-3GPP access to the second non-3GPP access to an AMF over a second non-3GPP access, receiving a registration accept message from the AMF in response to the registration request message, transmitting a PDU session establishment request message including information about the MA PDU session to a SMF over the second non-3GPP access, receiving a PDU session establishment accept message from the SMF in response to the PDU session establishment request message, and receiving, from the AMF, a deregistration request message informing that the UE is deregistered over the first non-3GPP access.

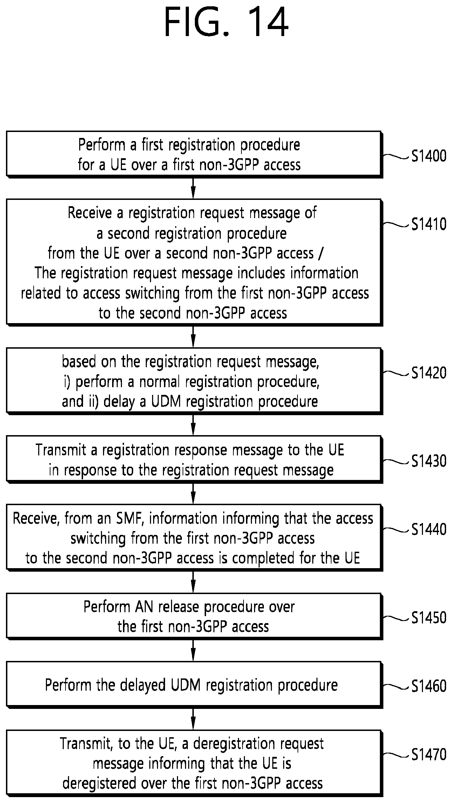

FIG. 14 shows an example of a method performed by an AMF to which implementations of the present disclosure is applied.

In step S1400, the method includes performing a first registration procedure for a UE over a first non-3GPP access.

In step S 1400, the method includes receiving a registration request message of a second registration procedure from the UE over a second non-3GPP access. The registration request message includes information related to access switching from the first non-3GPP access to the second non-3GPP access.

In some implementations, the first non-3GPP access or the second non-3GPP access may be any one of an untrusted non-3GPP access, a trusted non-3GPP access, or a wireline access. For example, the first non-3GPP access may be an untrusted non-3GPP access and the second non-3GPP access may be a trusted non-3GPP access. For example, the first non-3GPP access may be a trusted non-3GPP access and the second non-3GPP access may be an untrusted non-3GPP access. For example, both the first non-3GPP access and the second non-3GPP access may be an untrusted non-3GPP access or a trusted non-3GPP access.

In some implementations, the method may further comprise performing a registration procedure for the UE over a 3GPP access before performing the access switching.

In some implementations, the information related to the access switching may be a registration type set to "non-3GPP access switching registration" and/or "temporary registration". In this case, the UE may perform a newly defined type of registration.

In some implementations, the information related to the access switching may be a registration type set to "mobility registration update" that is not used in a non-3GPP access.

In some implementations, the information related to the access switching may be a new indicator in the registration request message. In this case, the UE may use the conventional registration type as it is.

In some implementations, based on the received information related to the access switching, the AMF may recognize that the UE performs registration for switching from the first non-3GPP access to the second non-3GPP access. For example, if the information related to the access switching is a registration type set to "non-3GPP access switching registration" and/or "temporary registration", the AMF may recognize that the UE performs registration for switching from the first non-3GPP access to the second non-3GPP access. For example, if the information related to the access switching is a registration type set to "mobility registration update" that is not used in the non-3GPP access, the AMF may recognize that the UE performs registration for switching from the first non-3GPP access to the second non-3GPP access. For example, if the information related to the access switching is a new indicator in the registration request message, the AMF may recognize that the UE performs registration for switching from the first non-3GPP access to the second non-3GPP access.

Alternatively, regardless of whether the registration request message includes information related to the access switching, the AMF may recognize that the UE performs registration for switching from the first non-3GPP access to the second non-3GPP access based on the UE context it has.

For example, the method may further comprise, based on a comparison of a UE context stored in the AMF for the first non-3GPP access and a UE context for the second non-3GPP access, determining the access switching from the first non-3GPP access to the second non-3GPP access. That is, by storing a new UE context (i.e., a current non-3GPP access type) that does not previously exist when the UE performs registration, and comparing the stored UE context with the UE context in the access where the new registration request was received, the AMF may recognize that the new registration request is for switching from the first non-3GPP access to the second non-3GPP access.

For example, the UE context may include at least one of User Location Information (ULI), a global N3IWF ID, or a global TNGF ID. For example, since the ULI is included and transmitted whenever signaling is transmitted from the AN to the AMF and has a different format, so the AMF may know over which non-3GPP access the UE has previously accessed based on the ULI. In addition, since the new registration request also includes the ULI, by comparing the previously transmitted ULI with the ULI in the new registration request, the AMF may recognize that the new registration request is for switching from the first non-3GPP access to the second non-3GPP access.

However, depending on the implementation, the ULI may be updated as soon as signaling is received. In this case, based on the ULI, the AMF may not recognize that the UE performs registration for switching from the first non-3GPP access to the second non-3GPP access.

Table 3 shows an example of ULI.

**[Table 3]**

| | | | | | | |
|---|---|---|---|---|---|---|
| >*N3IWF user location information* | | | | | | |
| >>IP Address | M | | Transport Layer Address 9.3.2.4 | UE's local IP address used to reach the N3IWF | - | |
| >>Port Number | O | | OCTET STRING (SIZE(2)) | UDP or TCP source port number if NAT is detected. | - | |
| *>TNGF user location information* | | | | | YES | ignore |
| >>TNAP ID | M | | OCTET STRING | TNAP Identifier used to identify the TNAP. Details in TS 29.571 [35]. | - | |
| >>IP Address | M | | Transport Layer | UE's local IP address used | - | |
| | | | Address 9.3.2.4 | to reach the TNGF. | | |
| >>Port Number | O | | OCTET STRING (SIZE(2)) | UDP or TCP source port number if NAT is detected. | - | |
| >*TWIF user location information* | | | | | YES | ignore |
| >>TWAP ID | M | | OCTET STRING | TWAP Identifier used to identify the TWAP. Details in TS 29.571 [35]. | - | |
| >>IP Address | M | | Transport Layer Address 9.3.2.4 | Non-5G-Capable over WLAN device's local IP address used to reach the TWIF. | - | |
| >>Port Number | O | | OCTET STRING (SIZE(2)) | UDP or TCP source port number if NAT is detected. | - | |
| >*W-AGF user location information* | | | | Indicates the location information via wireline access as specified in TS 23.316 [34]. | YES | ignore |
| >>W-AGF user location information | M | | 9.3.1.164 | | - | |

In step S 1420, the method includes, based on the registration request message, i) performing a normal registration procedure, and ii) delaying a UDM registration procedure. That is, when the UE performs registration for the access switching in a non-3GPP access, the AMF performs registration of a new second non-3GPP access switching while maintaining the previous registration of the first non-3GPP access switching. At this time, registration to UDM is not performed and is delayed.

In some implementations, the method may further comprise, before the access switching from the first non-3GPP access to the second non-3GPP access is completed, based on a network node that requests signaling related to a non-3GPP access not requesting to transmit over the second non-3GPP access, transmitting the signaling related to the non-3GPP access over the first non-3GPP access. That is, if the network node requesting signaling does not request to send signaling over the new second non-3GPP access, the AMF may transmit all signaling to be transmitted over the non-3GPP access to the previous first non-3GPP access.

In step S 1430, the method includes transmitting a registration accept message to the UE in response to the registration request message.

In step S1440, the method includes receiving, from a SMF, information informing that the access switching from the first non-3GPP access to the second non-3GPP access is completed for the UE.

In some implementations, when the access addition of the new type of non-3GPP access is completed (e.g., when the UE and the SMF perform access addition for the MA PDU session over the second non-3GPP access), after and/or while the SMF performs resource release over the previous first non-3GPP access, The SMF may inform the AMF that the access switching from the first non-3GPP access to the second non-3GPP access is completed. Accordingly, the AMF may know that the access switching in the non-3GPP access has been completed.

Alternatively, when the access addition of the new type of non-3GPP access is completed, the UE may notify the completion of the access switching from the first non-3GPP access to the second non-3GPP access to the AMF by performing registration or through a separate procedure. For example, the UE may add and transmit information, while performing registration, indicating that the access switching from the first non-3GPP access to the second non-3GPP access is completed to the AMF and/or may define a new registration type informing this.

In step S 1450, the method includes performing an AN release procedure over the first non-3GPP access.

In step S 1460, the method includes performing the delayed UDM registration procedure.

In step S1470, the method includes transmitting, to the UE, a deregistration request message informing that the UE is deregistered over the first non-3GPP access.

In some implementations, the method may further comprise, after the access switching from the first non-3GPP access to the second non-3GPP access is completed, notifying another network node (e.g., PCF) that RAT type information of the UE has changed.

In some implementations, the method may further comprise, after the access switching from the first non-3GPP access to the second non-3GPP access is completed, deleting a UE context related to the first non-3GPP access.

In some implementations, the method may further comprise, after the access switching from the first non-3GPP access to the second non-3GPP access is completed, transmitting signaling related to a non-3GPP access over the second non-3GPP access.

Furthermore, the method in perspective of the AMF described above in FIG. 14 may be performed by the second wireless device 200 shown in FIG. 2 and/or the wireless device 200 shown in FIG. 3.

More specifically, the AMF comprises at least one transceiver, at least one processor, and at least one memory operably connectable to the at least one processor. The at least one memory stores instructions to cause the at least one processor to perform following operations.

The AMF performs a first registration procedure for a UE over a first non-3GPP access. The AMF receives a registration request message of a second registration procedure from the UE over a second non-3GPP access. The registration request message includes information related to access switching from the first non-3GPP access to the second non-3GPP access.

In some implementations, the first non-3GPP access or the second non-3GPP access may be any one of an untrusted non-3GPP access, a trusted non-3GPP access, or a wireline access. For example, the first non-3GPP access may be an untrusted non-3GPP access and the second non-3GPP access may be a trusted non-3GPP access. For example, the first non-3GPP access may be a trusted non-3GPP access and the second non-3GPP access may be an untrusted non-3GPP access. For example, both the first non-3GPP access and the second non-3GPP access may be an untrusted non-3GPP access or a trusted non-3GPP access.

In some implementations, the AMF may perform a registration procedure for the UE over a 3GPP access before performing the access switching.

In some implementations, the information related to the access switching may be a registration type set to "non-3GPP access switching registration" and/or "temporary registration". In this case, the UE may perform a newly defined type of registration.

In some implementations, the information related to the access switching may be a registration type set to "mobility registration update" that is not used in a non-3GPP access.

In some implementations, the information related to the access switching may be a new indicator in the registration request message. In this case, the UE may use the conventional registration type as it is.

In some implementations, based on the received information related to the access switching, the AMF may recognize that the UE performs registration for switching from the first non-3GPP access to the second non-3GPP access. For example, if the information related to the access switching is a registration type set to "non-3GPP access switching registration" and/or "temporary registration", the AMF may recognize that the UE performs registration for switching from the first non-3GPP access to the second non-3GPP access. For example, if the information related to the access switching is a registration type set to "mobility registration update" that is not used in the non-3GPP access, the AMF may recognize that the UE performs registration for switching from the first non-3GPP access to the second non-3GPP access. For example, if the information related to the access switching is a new indicator in the registration request message, the AMF may recognize that the UE performs registration for switching from the first non-3GPP access to the second non-3GPP access.

Alternatively, regardless of whether the registration request message includes information related to the access switching, the AMF may recognize that the UE performs registration for switching from the first non-3GPP access to the second non-3GPP access based on the UE context it has.

For example, based on a comparison of a UE context stored in the AMF for the first non-3GPP access and a UE context for the second non-3GPP access, the AMF may further determine the access switching from the first non-3GPP access to the second non-3GPP access. That is, by storing a new UE context (i.e., a current non-3GPP access type) that does not previously exist when the UE performs registration, and comparing the stored UE context with the UE context in the access where the new registration request was received, the AMF may recognize that the new registration request is for switching from the first non-3GPP access to the second non-3GPP access.

For example, the UE context may include at least one of ULI, a global N3IWF ID, or a global TNGF ID. For example, since the ULI is included and transmitted whenever signaling is transmitted from the AN to the AMF and has a different format, so the AMF may know over which non-3GPP access the UE has previously accessed based on the ULI. In addition, since the new registration request also includes the ULI, by comparing the previously transmitted ULI with the ULI in the new registration request, the AMF may recognize that the new registration request is for switching from the first non-3GPP access to the second non-3GPP access.

However, depending on the implementation, the ULI may be updated as soon as signaling is received. In this case, based on the ULI, the AMF may not recognize that the UE performs registration for switching from the first non-3GPP access to the second non-3GPP access.

Based on the registration request message, the AMF i) performs a normal registration procedure, and ii) delays a UDM registration procedure. That is, when the UE performs registration for the access switching in a non-3GPP access, the AMF performs registration of a new second non-3GPP access switching while maintaining the previous registration of the first non-3GPP access switching. At this time, registration to UDM is not performed and is delayed.

In some implementations, before the access switching from the first non-3GPP access to the second non-3GPP access is completed, based on a network node that requests signaling related to a non-3GPP access not requesting to transmit over the second non-3GPP access, the AMF may further transmit the signaling related to the non-3GPP access over the first non-3GPP access. That is, if the network node requesting signaling does not request to send signaling over the new second non-3GPP access, the AMF may transmit all signaling to be transmitted over the non-3GPP access to the previous first non-3GPP access.

The AMF transmits a registration accept message to the UE in response to the registration request message.

The AMF receives, from a SMF, information informing that the access switching from the first non-3GPP access to the second non-3GPP access is completed for the UE.

In some implementations, when the access addition of the new type of non-3GPP access is completed (e.g., when the UE and the SMF perform access addition for the MA PDU session over the second non-3GPP access), after and/or while the SMF performs resource release over the previous first non-3GPP access, The SMF may inform the AMF that the access switching from the first non-3GPP access to the second non-3GPP access is completed. Accordingly, the AMF may know that the access switching in the non-3GPP access has been completed.

Alternatively, when the access addition of the new type of non-3GPP access is completed, the UE may notify the completion of the access switching from the first non-3GPP access to the second non-3GPP access to the AMF by performing registration or through a separate procedure. For example, the UE may add and transmit information, while performing registration, indicating that the access switching from the first non-3GPP access to the second non-3GPP access is completed to the AMF and/or may define a new registration type informing this.

The AMF performs an AN release procedure over the first non-3GPP access.

The AMF performs the delayed UDM registration procedure.

The AMF transmits, to the UE, a deregistration request message informing that the UE is deregistered over the first non-3GPP access.

In some implementations, after the access switching from the first non-3GPP access to the second non-3GPP access is completed, the AMF may further notify another network node (e.g., PCF) that RAT type information of the UE has changed.

In some implementations, after the access switching from the first non-3GPP access to the second non-3GPP access is completed, the AMF may further delete a UE context related to the first non-3GPP access.

In some implementations, after the access switching from the first non-3GPP access to the second non-3GPP access is completed, the AMF may further transmit signaling related to a non-3GPP access over the second non-3GPP access.

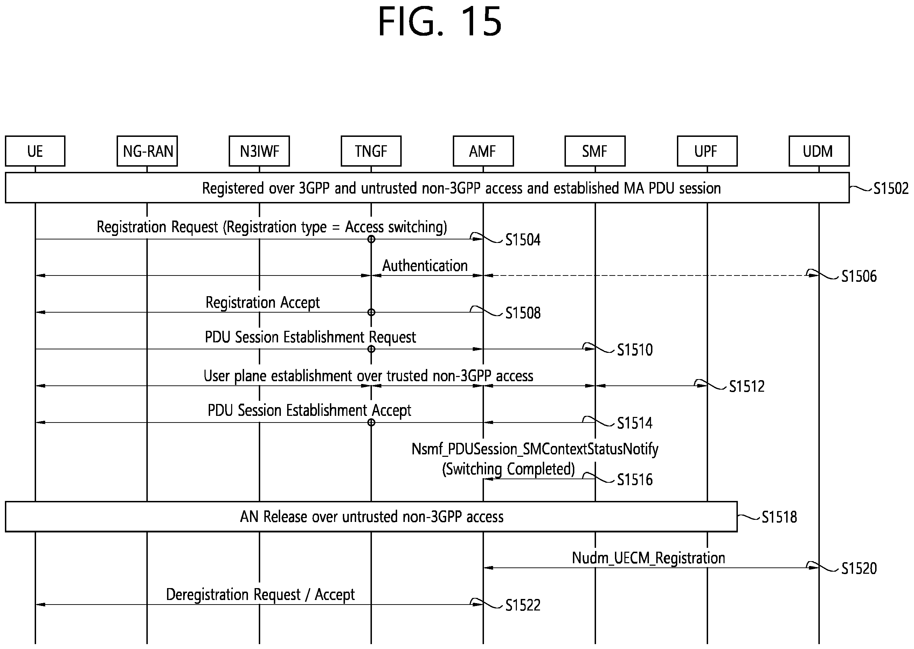

FIG. 15 shows an example of a procedure for switching from an untrusted non-3GPP access to a trusted non-3GPP access to which implementations of the present disclosure is applied.
- Step S1502: The UE is registered over 3GPP access and untrusted non-3GPP access and established MA PDU session. During the MA PDU session establishment, the UE may indicate whether it supports non-3GPP access switching in the PDU Session Establishment Request message. The AMF may also indicate whether it supports non-3GPP access switching to the SMF. Considering the received capabilities of the UE, AMF and SMF capability, the SMF may indicate whether non-3GPP access switching is supported to the UE in the PDU Session Establishment Accept message.
- Step S1504: The UE registers over trusted non-3GPP access with new registration type "non-3GPP access switching".
- Step S1506: The AMF may perform authentication procedure based on existing procedure.
- Step S1508: The AMF performs normal registration procedure but does not perform UDM registration. All Mobile-Terminated (MT) signaling and reachability procedures are performed as if the UE is registered over untrusted non-3GPP access until non-3GPP access switching is completed. The AMF provides Registration Accept message to the UE.
- Step S1510: The UE sends PDU Session Establishment Request message to add access over the trusted non-3GPP access using the existing access addition procedure.
- Step S1512: The SMF establishes user plane resources over the trusted non-3GPP access. At this point, there may be three user plane tunnels (i.e., 3GPP access, untrusted non-3GPP access, trusted non-3GPP access) in the UE and UPF. When the SMF establishes user plane resources over the trusted non-3GPP access, the SMF indicates the target access type to "trusted non-3GPP access" so that the N2 information is delivered to the trusted non-3GPP access. During the N4 modification procedure, the UPF may provide updated Performance Measurement Function (PMF) address information to the SMF. The UE and UPF stops sending traffic over untrusted non-3GPP access and starts sending traffic over trusted non-3GPP access.
- Step S1514: The SMF provides PDU Session Establishment Accept message to the UE. If the SMF need to update PMF address information, it is included in the PDU Session Establishment Accept message.
- Step S1516: The SMF notifies the AMF that the access switching is completed by triggering Nsmf_PDUSession_SMContextStatusNotify service operation.
- Step S1518: The AMF performs AN release procedure over the untrusted non-3GPP access. As a result of this procedure, user plane resources over untrusted non-3GPP access of MA PDU is completely released. Also, user plane resources of single access PDU session is deactivated.
- Step S1520: The AMF performs skipped (i.e., delayed and/or not performed) UDM registration by triggering Nudm_UECM_Registration service operation. After this point, all signaling and reachability procedures are performed over the trusted non-3GPP access.
- Step S1522: The AMF sends Deregistration request message indicating that the UE is deregistered over untrusted non-3GPP access. The UE and AMF removes any contexts related with untrusted non-3GPP access.

Impacts on existing nodes and functionality according to the second implementation of the present disclosure is as follows.
(1) UE
   - Temporarily maintains simultaneous registration over untrusted 3GPP access and trusted non-3GPP access.
   - Performs registration with new registration type.
   - Indicates to the SMF that the UE supports non-3GPP access switching during the MA PDU Session Establishment.
(2) AMF
   - Temporarily maintains simultaneous registration over untrusted 3GPP access and trusted non-3GPP access.
   - During the registration procedure, delay UDM registration until non-3GPP access switching is completed.
   - Indicates to the SMF that the AMF supports non-3GPP access switching during the MA PDU Session Establishment.
   - Performs AN release and deregistration procedure over old access after non-3GPP access switching is completed.
(3) SMF
   - Indicates to the UE whether network supports non-3GPP access switching during the MA PDU Session Establishment.
   - Notifies the AMF that non-3GPP access switching is completed
(4) UPF
   - Temporarily maintains simultaneous parallel user plane tunnel over untrusted 3GPP access and trusted non-3GPP access.

The drawings according to the above-described implementations of the present disclosure may be performed individually or may be performed together with other drawings.

The present disclosure may have various advantageous effects.

For example, the UE can support service continuity by supporting access addition for the MA PDU session between different types of non-3GPP accesses.

For example, when the UE finds a new non-3GPP access, by supporting access switching between non-3GPP accesses, traffic using the MA PDU session can be transmitted smoothly.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a user equipment (UE) adapted to operate in a wireless communication system, the method comprising:
performing a first registration procedure over a first non-3rd Generation Partnership Project (non-3GPP) access;
establishing a Multi-Access Protocol Data Unit (MA PDU) session over the first non-3GPP access;
transmitting a registration request message of a second registration procedure to an Access and mobility Management Function (AMF) over a second non-3GPP access, wherein the registration request message includes information related to access switching from the first non-3GPP access to the second non-3GPP access;
receiving a registration accept message from the AMF in response to the registration request message;
transmitting a PDU session establishment request message to a Session Management Function (SMF) over the second non-3GPP access, wherein the PDU session establishment request message includes information about the MA PDU session;
receiving a PDU session establishment accept message from the SMF in response to the PDU session establishment request message; and
receiving, from the AMF, a deregistration request message informing that the UE is deregistered over the first non-3GPP access.

2. The method of claim 1, wherein the first non-3GPP access or the second non-3GPP access is any one of an untrusted non-3GPP access, a trusted non-3GPP access, or a wireline access.

3. The method of claim 1 or 2, wherein the method further comprises performing a registration procedure over a 3GPP access before performing the access switching.

4. The method of any one of the preceding claims, wherein the information related to the access switching is at least one of a registration type set to "non-3GPP access switching registration", a registration type set to "mobility registration update" that is not used in a non-3GPP access, or a new indicator in the registration request message.

5. The method of any one of the preceding claims, wherein the method further comprises, based on information about whether the access switching in a non-3GPP access is supported received from the SMF, determining the access switching from the first non-3GPP access to the second non-3GPP access.

6. The method of any one of the preceding claims, wherein the information about the MA PDU session includes at least one of a request type set to "MA PDU Request" in the PDU session establishment request message or a PDU session Identifier (ID) of the MA PDU session.

7. The method of any one of the preceding claims, wherein the UE communicates with at least one of a mobile device, a network and/or an autonomous vehicle other than the UE.

8. A User Equipment (UE) adapted to operate in a wireless communication system, the UE comprising:
at least one transceiver;
at least one processor; and
at least one memory operably connectable to the at least one processor and storing instructions that, based on being executed by the at least one processor, perform operations comprising:
performing a first registration procedure over a first non-3rd Generation Partnership Project (non-3GPP) access;
establishing a Multi-Access Protocol Data Unit (MA PDU) session over the first non-3GPP access;
transmitting a registration request message of a second registration procedure to an Access and mobility Management Function (AMF) over a second non-3GPP access, wherein the registration request message includes information related to access switching from the first non-3GPP access to the second non-3GPP access;
receiving a registration accept message from the AMF in response to the registration request message;
transmitting a PDU session establishment request message to a Session Management Function (SMF) over the second non-3GPP access, wherein the PDU session establishment request message includes information about the MA PDU session;
receiving a PDU session establishment accept message from the SMF in response to the PDU session establishment request message; and
receiving, from the AMF, a deregistration request message informing that the UE is deregistered over the first non-3GPP access.

9. A method performed by an Access and mobility Management Function (AMF) adapted to operate in a wireless communication system, the method comprising:
performing a first registration procedure for a User Equipment (UE) over a first non-3rd Generation Partnership Project (non-3GPP) access;
receiving a registration request message of a second registration procedure from the UE over a second non-3GPP access, wherein the registration request message includes information related to access switching from the first non-3GPP access to the second non-3GPP access;
based on the registration request message, i) performing a normal registration procedure, and ii) delaying a Unified Data Management (UDM) registration procedure;
transmitting a registration accept message to the UE in response to the registration request message;
receiving, from a Session Management Function (SMF), information informing that the access switching from the first non-3GPP access to the second non-3GPP access is completed for the UE;
performing an Access Network (AN) release procedure over the first non-3GPP access;
performing the delayed UDM registration procedure; and
transmitting, to the UE, a deregistration request message informing that the UE is deregistered over the first non-3GPP access.

10. The method of claim 9, wherein the method further comprises, based on a comparison of a UE context stored in the AMF for the first non-3GPP access and a UE context for the second non-3GPP access, determining the access switching from the first non-3GPP access to the second non-3GPP access.

11. The method of claim 10, wherein the UE context includes at least one of User Location Information (ULI), a global Non-3GPP Interworking Function (N3IWF) Identifier (ID), or a global Trusted Non-3GPP Gateway Function (TNGF) ID.

12. The method of any one of claims 9 to 11, wherein the method further comprises, before the access switching from the first non-3GPP access to the second non-3GPP access is completed, based on a network node that requests signaling related to a non-3GPP access not requesting to transmit over the second non-3GPP access, transmitting the signaling related to the non-3GPP access over the first non-3GPP access.

13. The method of any one of claims 9 to 12, wherein the method further comprises, after the access switching from the first non-3GPP access to the second non-3GPP access is completed, notifying another network node that Radio Access Technology (RAT) type information of the UE has changed.

14. The method of any one of claims 9 to 13, wherein the method further comprises, after the access switching from the first non-3GPP access to the second non-3GPP access is completed, deleting a UE context related to the first non-3GPP access.

15. The method of any one of claims 9 to 14, wherein the method further comprises, after the access switching from the first non-3GPP access to the second non-3GPP access is completed, transmitting signaling related to a non-3GPP access over the second non-3GPP access.
